# EUROPÄISCHE PATENTSCHRIFT

(11) **EP 4 357 653 B1**
(45) Veröffentlichungstag und Bekanntmachung des Hinweises auf die Patenterteilung: **22.07.2026**
(21) Anmeldenummer: 22202569.4
(22) Anmeldetag: 19.10.2022
(51) Int. Cl.: F16K 17/16, F17C 13/06

(54) **ANORDNUNG ZUM ABSPERREN ODER FREIGEBEN EINES DURCHFLUSSES VON FLUIDEN**
ARRANGEMENT FOR BLOCKING OR RELEASING A FLOW OF FLUIDS
DISPOSITIF POUR FERMER OU LIBÉRER UN DÉBIT DE FLUIDES

(43) Veröffentlichungstag der Anmeldung: 24.04.2024
(73) Patentinhaber: Rembe GmbH Safety + Control, 59929 Brilon (DE)
(72) Erfinder: Kleine, Daniel, 59929 Brilon (DE); Kluge, Sebastian, 59929 Brilon (DE); Penno, Stefan, 59929 Brilon (DE)
(74) Vertreter: Fritz Patent- und Rechtsanwälte PartmbB

(56) Entgegenhaltungen:
- EP-A1- 3 354 948
- CN-B- 104 329 496
- CN-B- 107 763 267
- US-A- 3 834 729
- US-A1- 2014 014 194

## Beschreibung

Die vorliegende Erfindung betrifft eine Anordnung zum Absperren oder Freigeben eines Durchflusses von Fluiden durch ein das Fluid von einer Hochdruckseite zu einer Niederdruckseite leitendes Bauteil, das einen Fluiddurchgang begrenzt, wobei die Anordnung,
a. das Bauteil, das das Fluid leitet,
b. eine Berstscheibe als Mittel zum Verschließen des Fluiddurchgangs durch das Bauteil, welche die Hochdruckseite und die Niederdruckseite trennt, wobei die Berstscheibe zumindest mittelbar an dem Bauteil befestigt ist, und
c. einen steuerbaren Aktuator, der zum Freigeben des Fluiddurchgangs ansteuerbar ist
aufweist.

Aus den Dokument EP 2 347 151 B1 sind derartige Anordnungen bekannt, die Berstscheiben aufweisen, die einen Fluiddurchgang durch ein Bauteil verschließen, wobei ein Aktuator vorgesehen ist, der im Bedarfsfall für eine Freigabe des Fluiddurchgangs sorgen kann. Die Aktuatoren sind auf einer Hochdruckseite der Berstscheiben angeordnet. Zum Freigeben des Fluiddurchgangs wird mit Hilfe der Aktuatoren der Berstdruck der Berstscheibe herabgesetzt und zwar so weit, dass er unter dem auf der Hochdruckseite anstehenden Druck fällt, so dass der auf der Hochdruckseite anstehende Druck ausreicht, die Berstscheibe zum Bersten zu bringen. Auch aus dem Dokument EP 3 354 948 A1 ist eine solche Anordnung bekannt.

Das Dokument CN 107763267 B offenbart eine zweilagige Berstscheibe, wie sich aus der Fig 2 des Dokumentes entnehmen lässt. Zum Öffnen der Berstscheibe wird die Berstscheibe mit einem Aktuator beschädigt, wodurch der Nennberstdruck der Berstscheibe unter den auf der Hochdruckseite anstehenden Druck herabgesetzt wird, so dass dieser anstehende Druck die Berstscheibe 2 kollabieren lässt. Das geht aus Absatz [0031] des Dokumentes CN 107763267 B hervor.

Auch das Dokument US 2014/0014194 A1 offenbart eine Anordnung mit einer mehrlagigen Berstscheibe (siehe US 2014/0014194 A1, Absatz [0046] und [0047]), die eine abschnittsweise gewölbte "thin dome plate", eine ebenso abschnittsweise gewölbte "rupture guide plate" und eine ringförmige "support plate" aufweist, wobei die ringförmige "support plate" auf der konvexen Seite der "thin dome plate" und die "rupture guide plate" auf der konkaven Seite der "thin dome plate" angeordnet ist. Die drei Lagen der Berstscheibe sind durch Laminieren miteinander fest verbunden. Dieser Verbund bildet die Berstscheibe.

Das Dokument US 3 834 729 A offenbart eine Anordnung nach dem Oberbegriff des Anspruchs 1.

Die Erfinder hatten es sich zur Aufgabe gemacht, eine zu der aus dem Dokument EP 2 347 151 B1 bekannten Lösung alternative Lösung zu suchen.

Diese Aufgabe haben die Erfinder durch eine Anordnung mit den Merkmalen des Anspruchs 1 gelöst. Eine erfindungsgemäße Anordnung weist ein Stützelement zum Stützen der Berstscheibe auf. Zum Stützen der Berstscheibe
a. hat das Stützelement zumindest mittelbar Kontakt zu der Niederdruckseite der Berstscheibe und nimmt eine dort auf der Bertscheibe lastende Kraft auf,
b. hat das Stützelement zumindest mittelbar Kontakt zu dem Bauteil mit dem Fluiddurchgang und leitet die von der Berstscheibe aufgenommene Kraft in das Bauteil ab und,
c. ist zwischen diesen beiden Kontaktstellen die aufgenommene Kraft durch das Stützelement geleitet.

Das Stützelement ist auf der Niederdruckseite der Berstscheibe angeordnet und stützt die Berstscheibe, so dass die Berstscheibe einem Druck des Fluids auf der Hochdruckseite größer als ein Nennberstdruck der Berstscheibe aber kleiner als ein Maximaldruck standhält. Dabei sind der Aktuator und das Stützelement so zueinander angeordnet, dass der Aktuator zum Freigeben des Fluiddurchgangs das Stützelement zerstören oder beschädigen kann und ein auf der Hochdruckseite der Berstscheibe anstehender Druck des Fluides die Berstscheibe zum Bersten bringt, wenn der Druck höher ist als der Nennberstdruck der Berstscheibe.

Außerdem hat das Stützelement zwischen dem Befestigungsbereich und dem an der Berstscheibe anliegenden Bereich einen Stützbereich, durch den die Kräfte von dem an der Berstscheibe anliegenden Bereich des Stützelements zum Befestigungsbereich geleitet werden. Dabei ist mit dem Aktuator (3) zum Freigeben des Fluiddurchgangs an einer Stelle zwischen den beiden Kontaktstellen oder auch den Kontaktstellen selbst die Zerstörung oder Beschädigung des Stützelementes herbeiführbar, um das Stützelement so zu zerstören oder zu beschädigen, dass es seine Funktion als Stütze für die Berstscheibe nicht mehr erfüllt.

Anders als bei der aus dem Dokument EP 2 347 151 B1 bekannten Lösung wird mit dem Aktuator nicht die Berstscheibe so beschädigt, dass der Berstdruck unter den auf der Hochdruckseite herrschenden Druck herabgesetzt wird und die Berstscheibe deshalb berstet. Stattdessen wird eine Berstscheibe verwendet, deren Berstdruck von vornherein so niedrig ist, dass er niedriger ist als der auf der Hochdruckseite herrschende Berstdruck. Die Berstscheibe einer erfindungsgemäßen Anordnung würde also bersten, wenn nicht vor der Betätigung des Aktuators die Berstscheibe von dem Stützelement gestützt würde. Im Bedarfsfall wird durch die Betätigung des Aktuators das Stützelement zerstört oder beschädigt, so dass es seine Funktion als Stütze nicht mehr wahrnehmen kann. Durch das Versagen der Stütze birst dann die Berstscheibe ohne weiteres.

Ein Vorteil der erfindungsgemäßen Anordnung gegenüber der bekannten Lösung ist, dass für die Konstruktion der erfindungsgemäßen Lösung keine Überlegungen angestellt werden müssen, an welcher Stelle die Berstscheibe mit welcher Kraft, unter welchem Winkel und mit was für einem Gegenstand die Berstscheibe getroffen werden muss ohne sie zu zerstören, damit eine Beschädigung der Berstscheibe eintritt, durch die der Nennberstdruck ausreichend herabgesetzt wird, damit diese öffnet und den Fluiddurchgang freigibt. Stattdessen kann eine Berstscheibe genommen werden, von der lediglich der Nennberstdruck bekannt ist. Dagegen muss bei der Konstruktion der Anordnung ein Augenmerk auf die Konstruktion der Stütze gelegt werden. Diese muss im Bedarfsfall kollabieren, so dass sie die Berstscheibe nicht mehr stützt. Die Konstruktion einer Stütze und deren Anpassung an einen Aktuator ist aber einfacher als die Auswahl einer Berstscheibe für die aus dem Dokument EP 2 347 151 B1 bekannte Anordnung.

Das Stützelement kann im Grund auf beliebige Art gestaltet sein. Zum Stützen der Berstscheibe hat das Stützelement zumindest mittelbar Kontakt zu der Niederdruckseite der Berstscheibe, um dort eine auf der Berscheibe lastende Kraft aufzunehmen. Ferner hat das Stützelement zumindest mittelbar Kontakt zu dem Bauteil mit dem Fluiddurchgang, um die von der Berstscheibe aufgenommene Kraft in das Bauteil abzuleiten. Zwischen diesen beiden Kontaktstellen, wird die aufgenommene Kraft durch das Stützelement geleitet. Mit dem Aktuator kann im Grunde an jeder beliebigen Stelle zwischen den beiden Kontaktstelle oder auch den Kontaktstellen selbst eine Beschädigung oder Zerstörung des Stützelementes herbeigeführt werden, um das Stützelement so zu beschädigen oder zu zerstören, dass es seine Funktion als Stütze für die Berstscheibe nicht mehr erfüllen kann.

Das Stützelement kann eine Scheibe sein, das zumindest bereichsweise an der Berstscheibe anliegt, vorteilhaft in einem Bereich, in dem die Berstscheibe dem auf der Hochdruckseite herrschendem Druck ausgesetzt ist.

Eine erfindungsgemäße Anordnung kann mit einer flachen oder einer gewölbten Berstscheibe realisiert werden, insbesondere ist die Realisierung mit einer vorwärts öffnenden Berstscheibe, einer Umkehrberstscheibe möglich. Die das Stützelement bildende Scheibe kann zumindest bereichsweise so gewölbt sein wie die Berstscheibe.

Das Stützelement hat einen Befestigungsbereich, mit dem das Stützelement zumindest mittelbar an dem das Fluid leitenden Bauteils befestigt ist. Dieser Befestigungsbereich kann ein Ring oder Flansch sein. Dieser kann einen gewölbten mittleren Bereich umgeben.

Das Stützelement hat zwischen dem Befestigungsbereich und dem an der Berstscheibe anliegenden Bereich einen Stützbereich, durch den die Kräfte von dem an der Berstscheibe anliegenden Bereich des Stützelements zum Befestigungsbereich geleitet werden. Auf diesen Stützbereich kann der Aktuator zum Freigeben des Fluiddurchgangs einwirken. Der Stützbereich kann zerstört oder beschädigt werden, so dass die von der Berstscheibe in das Stützelement eingeleiteten Kräfte nicht mehr in den Befestigungsbereich abgeleitet werden können, weshalb die Berstscheibe dann öffnet.

Der Aktuator kann einen Stößel und einen Antrieb zum Antreiben des Stößels aufweisen. Der Antrieb des Aktuators kann zum Freigeben des Fluiddurchgangs den Stößel gegen den Stützbereich schlagen. Der Antrieb kann ein elektrischer oder ein elektromagnetischer Antrieb sein. Der Antrieb kann auch eine Treibladung sein. Diese kann elektrisch gezündet werden.

Das Stützelement kann wenigstens eine Sollbruchstelle, Sollbruchlinie oder dergleichen aufweisen. Insbesondere der Stützbereich eines Stützelementes kann die Sollbruchstelle, Sollbruchlinie oder dergleichen oder eine oder mehrere der Sollbruchstellen, Sollbruchlinien oder dergleichen aufweisen.

Ferner kann das Stützelement Schlitze, Löcher oder Perforierungen aufweisen.

Eine erfindungsgemäße Anordnung zum Absperren oder Freigeben eines Durchflusses von Fluiden kann ein Manometer und/oder einen Drucksensor aufweisen. Das Manometer und/oder der Drucksensor können den Druck auf der Hochdruckseite der Berstscheibe erfassen. Dazu kann das Bauteil wenigstens ein Loch aufweisen. In das Loch bzw. in die Löcher können das Manometer bzw. der Drucksensor eingesetzt sein.

Weitere Merkmale und Vorteile eines Ausführungsbeispiels der Erfindung werden in der Zeichnung näher dargestellt. Es zeigen:
- Fig. 1: eine perspektivische Ansicht einer mit einer erfindungsgemäßen Anordnung verschlossenen Löschmittelflasche, die über die Anordnung und mittels dieser geöffnet werde kann,

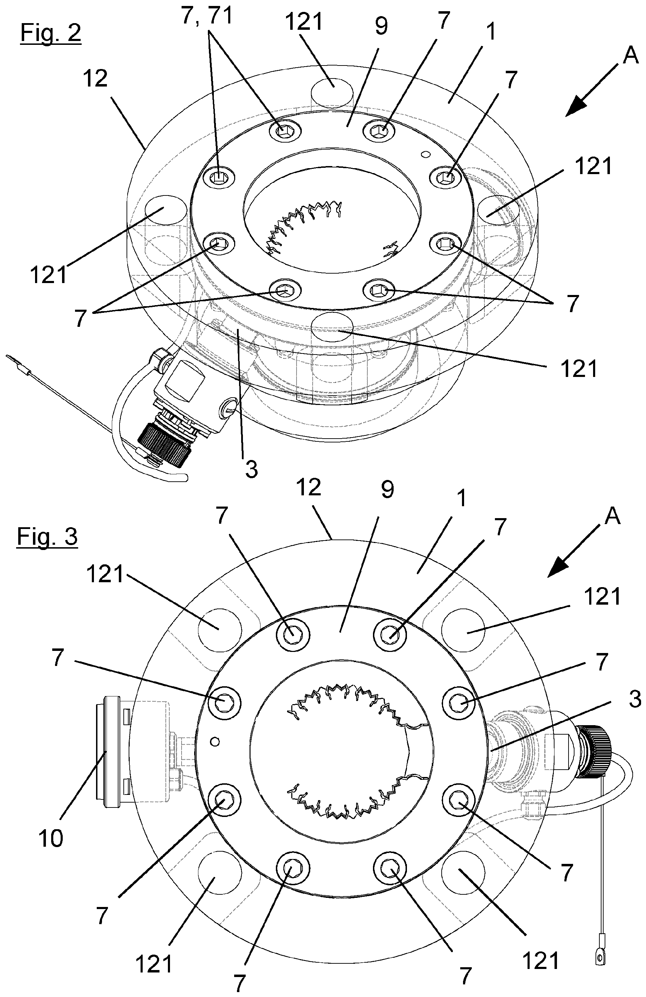

- Fig. 2: eine perspektivische Ansicht der Anordnung,
- Fig. 3: eine Draufsicht auf die Anordnung,

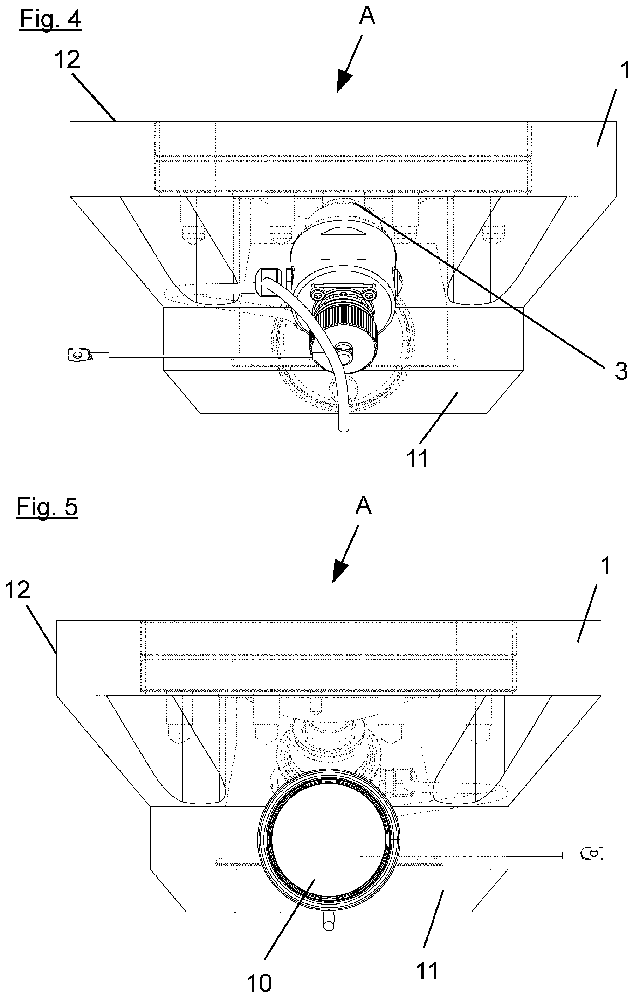

- Fig. 4: eine Ansicht auf die Seite der Anordnung, auf die ein Aktuator der Anordnung vorgesehen ist,
- Fig. 5: eine Ansicht auf die Seite der Anordnung, auf der ein Manometer vorgesehen ist,

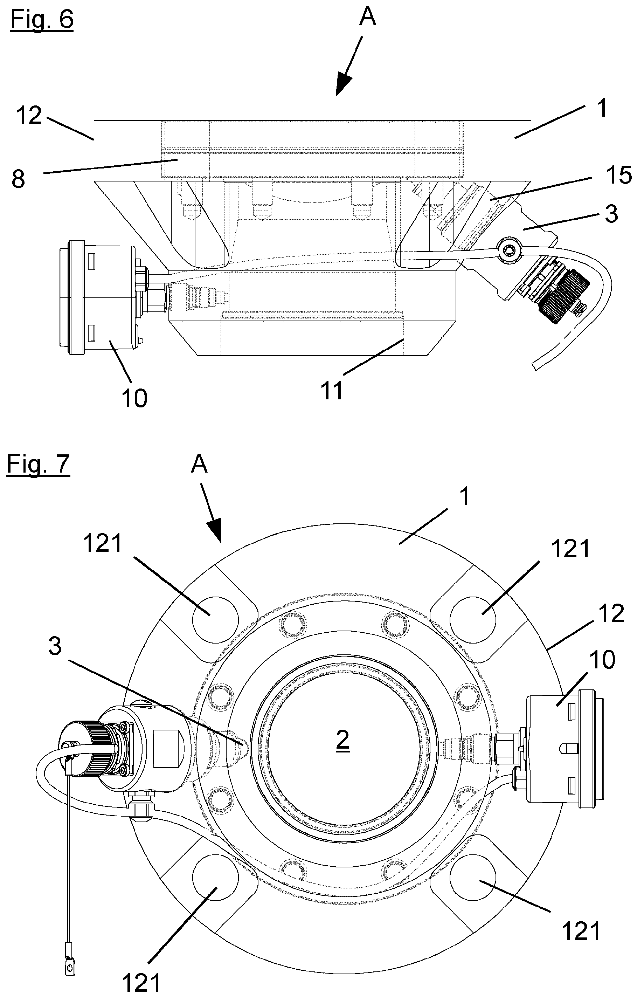

- Fig. 6: eine Ansicht der Anordnung von vorne,
- Fig. 7: eine Ansicht der Anordnung von unten,

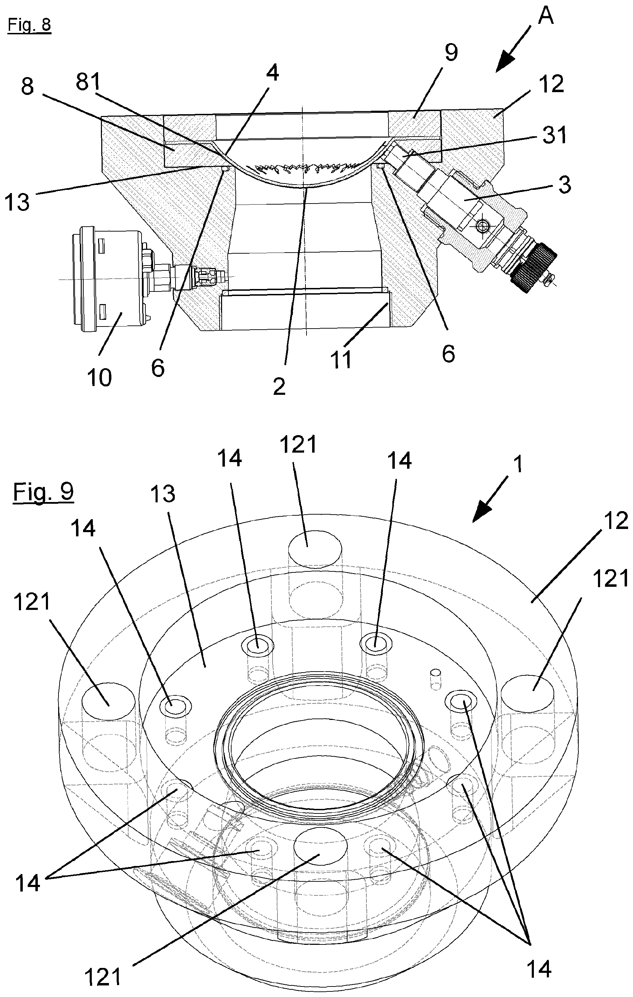

- Fig. 8: einen Schnitt durch die Anordnung gemäß der Linie VIII-VIII in Fig. 3
- Fig. 9: eine perspektivische Ansicht eines Bauteils der Anordnung mit einem Fluiddurchgang,

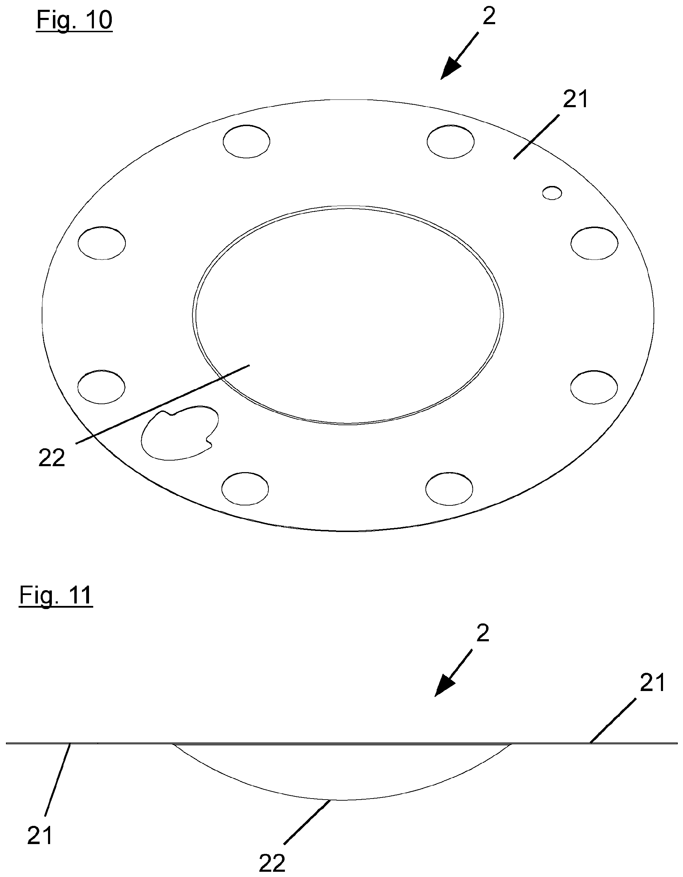

- Fig. 10: eine perspektivische Ansicht einer Berstscheibe der Anordnung,
- Fig. 11: eine Seitenansicht der Berstscheibe

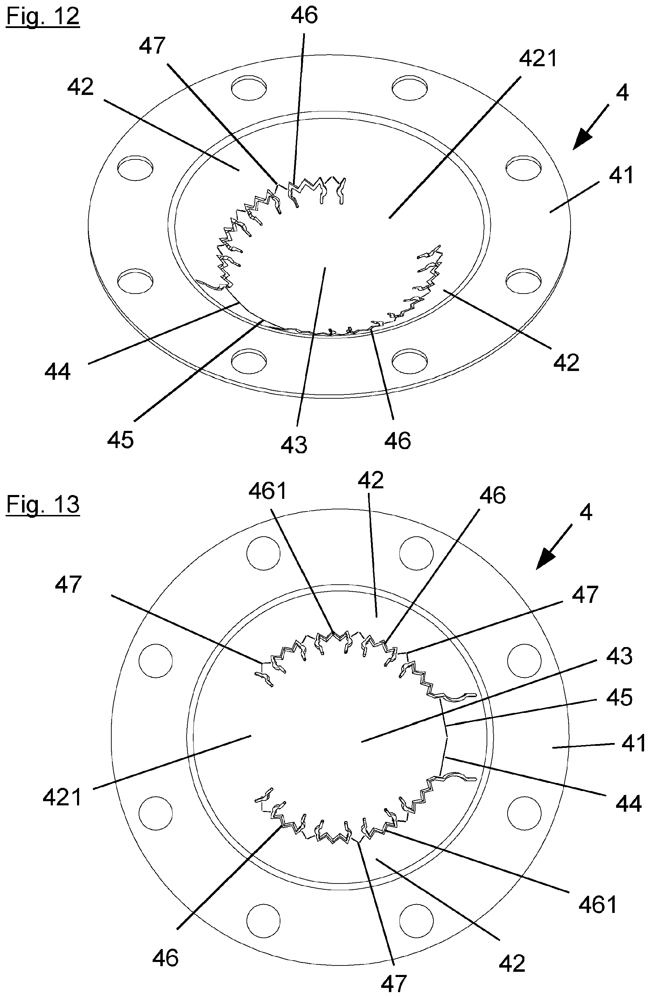

- Fig. 12: eine perspektivische Ansicht eines Stützelements der Anordnung,
- Fig. 13: eine Draufsicht auf das Stützelement,

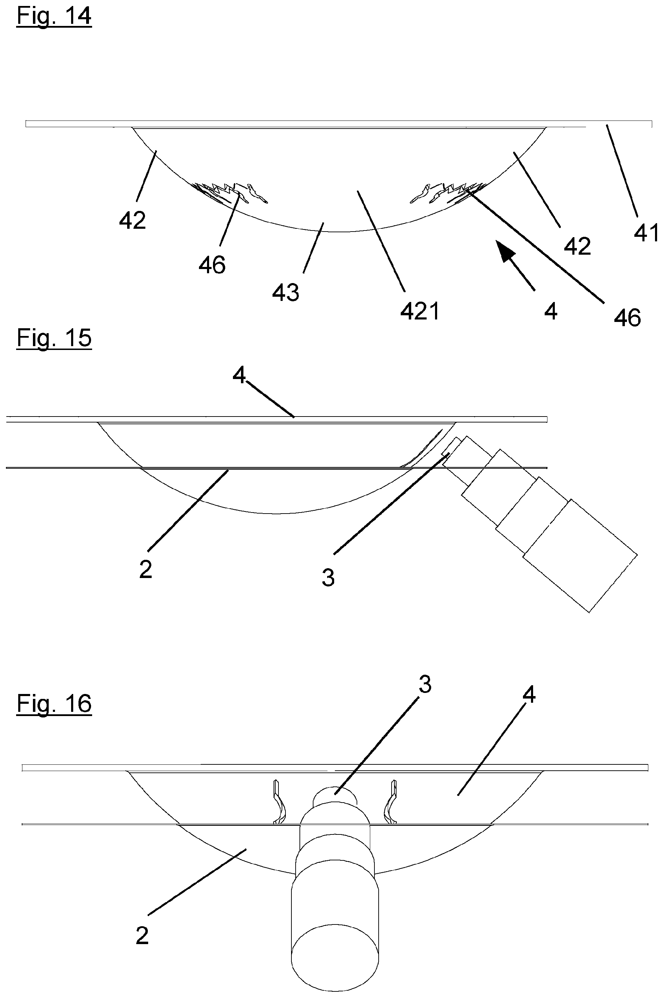

- Fig. 14: eine Seitenansicht des Stützelements,
- Fig. 15: eine Ansicht der Berstscheibe, des Stützelementes und des Aktuators von vorne
- Fig. 16: eine Ansicht des Stützelementes und des Aktuators von der Seite auf der der Aktuator angeordnet ist.

Es ist nicht notwendig, dass eine erfindungsgemäße Vorrichtung alle nachfolgend beschriebenen Merkmale aufweist. Es ist auch möglich, dass eine erfindungsgemäße Vorrichtung nur einzelne Merkmale des nachfolgend beschriebenen Ausführungsbeispiels aufweist.

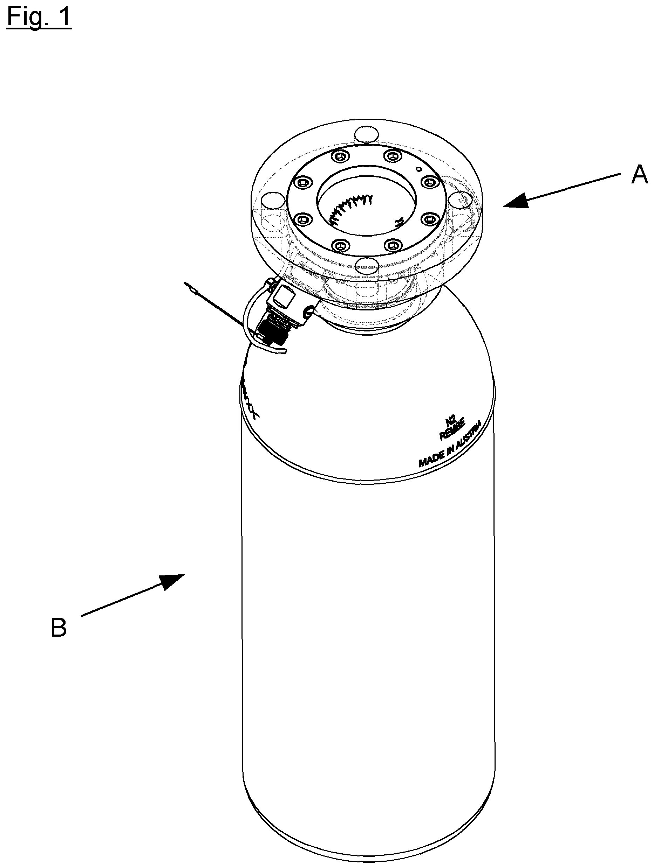

Die in der Figur 1 dargestellte Löschmittelflasche B ist mit einem Löschmittel gefüllt. Sie kann in technischen Anlagen verwendet werden, um zum Beispiel bei einem Brandereignis Löschmittel, insbesondere ein Löschpulver, ausbringen und zum Beispiel in einen Behälter oder eine Leitung einzubringen.

Die erfindungsgemäße Anordnung A weist ein Bauteil 1 auf, welches einen Fluiddurchgang bildet, durch den das Löschmittel aus der Flasche B austreten kann. Dieser Fluiddurchgang ist im Normalfall durch eine Berstscheibe 2 der Anordnung A verschlossen.

Das Bauteil 1 weist auf einer der Flasche B zugewandten Seite am Ende des Fluiddurchgang ein Innengewinde 11 auf, mit dem die Flasche B ein Hals der Flasche B mit einem Außengewinde an der Öffnung der Flasche B angeschlossen werden kann. Auf der gegenüberliegenden Seite bildet das Bauteil 1 einen Flansch 12, über die die Löschmittelflasche B zum Beispiel an die Leitung oder den Behälter angeschlossen werden kann, in die oder den das Löschmittel eingebracht werden soll. Dieser Flansch 12 weist mehrere Schraublöcher 121 für die Verschraubung mit einem Flansch zum Beispiel der Leitung oder des Behälters auf.

Der Fluiddurchgang erstreckt sich von dem Innengewinde 11 zu dem Flansch 12. In der den Fluiddurchgang begrenzenden Wand des Bauteils 1 ist ein Absatz 13 vorgesehen, an dem die Wand in Richtung vom Innengewinde 11 zum Flansch schauend nach außen versetzt ist. In dem Absatz 13 sind Schraublöcher 14 vorgesehen. Außerdem ist ein Durchgangsloch 15 vorgesehen, durch die der Aktuator 3 der Anordnung A hindurchragt. In die Schraublöcher 14 sind Schrauben 7 eingeschraubt.

Auf den Absatz 13 ist die Berstscheibe 2 der Anordnung A aufgelegt. Die Berstscheibe 2 hat einen ringförmigen, flachen Befestigungsbereich 21 und einen gewölbten Dichtbereich 22, der innerhalb des Befestigungsbereich 21 liegt. Die Wölbung ist in Richtung der Löschmittelfasche gerichtet. Die Berstscheibe 2 ist eine Berstscheibe, die in Richtung der Löschmittelflasche gewölbt ist. Durch die Berstscheibe 2 ist der Fluiddurchgang verschlossen. Durch ein Öffnen der Berstscheibe 2 kann der Fluiddurchgang für das Austreten des Löschmittels aus der Flasche freigegeben werden. In einem Randbereich des Absatzes 13 ist eine Dichtung 6, nämlich ein O-Ring vorgesehen, der verhindert, dass das Fluid zwischen die Berstscheibe 2 und das Bauteil 1 eindringt. Der Befestigungsbereich 21 der Berstscheibe 2 hat Durchgangslöcher für die Schrauben 7, die in die Schraublöcher 14 in dem Absatz 13 eingeschraubt sind. Ferner ist ein Durchgangsloch vorgesehen, durch die der Aktuator 3 der Anordnung A hindurchragt.

Die Berstscheibe 2 sperrt den Fluiddurchgang und trennt einen Hochdruckbereich des Fluiddurchgangs auf der einen Seite der Berstscheibe 2, der in die Flasche B mündet, von einem Niederdruckbereich des Fluiddurchgangs auf der anderen Seite der Berstscheibe 2, der in dem Flansch 12 des den Fluiddurchgang bildenden Bauteils 1 mündet.

Auf den Befestigungsbereich 21 der Berstscheibe 2 ist ein sogenannter Niederhalter 8 angeordnet, mittels dem der Befestigungsbereich 21 der Berstscheibe 2 gegen den Absatz 13 gedrückt ist. Der Niederhalter 8 ist ein Ring der deckungsgleich zu den Schraublöchern 14 in dem Absatz 13 und den Durchgangslöcher in dem Befestigungsbereich 21 der Berstscheibe 2 Durchgangslöcher für die Schrauben 7 hat, die in die Schraublöcher 14 eingeschraubt sind. Auf der der Berstscheibe 2 zugewandten Seite, hat der Niederhalter 8 eine ebene Fläche, mit der der Niederhalter auf der Berstscheibe 2 aufliegt.

Auf der der Berstscheibe 2 abgewandten Seite hat der Niederhalter 8 eine rinnenartige Einwölbung 81, die an der Berstscheibe 2 abgewandten Seite des Niederhalters 8 beginnt und einer Innenseite des Niederhalters 8 endet und sich gleichförmig um den gesamten Umfang des Niederhalters 8 erstreckt. In diese rinnenartige Einwölbung mündet ein Durchgangsloch für den Aktuator 3, das eine Fortsetzung des für den Aktuator 3 vorgesehenen Durchgangslochs der Berstscheibe 2 und des Bauteils 1 ist.

Auf den Niederhalter 8 ist das Stützelement 4 aufgelegt. Das Stützelement 4 ist ähnlich der Berstscheibe 2 aus einem Blech hergestellt. Beim Stützelement 4 lassen sich zumindest drei Bereiche 41, 42, 43 unterscheiden. Da ist zunächst ein Befestigungsbereich 41, der durch einen flachen Ring gebildet ist. Dieser Befestigungsbereich 41 liegt auf der der Berstscheibe 2 abgewandten Seite des Niederhalters 8 auf. Er hat deckungsgleich zum Niederhalter 8 und zur Berstscheibe 2 Durchgangslöcher für die Schrauben 7, mit denen die Berstscheibe 2, der Niederhalter 8 und das Stützelement 4 an dem Bauteil 1, das den Fluiddurchgang bildet, befestigt sind.

Der Befestigungsbereich 41 des Stützelementes 4 fasst eine Wölbung ein, die die beiden weiteren Bereiche 42, 43 bildet. Da ist zunächst an den Befestigungsbereich 41 anschließend ein ringförmiger Stützbereich 42, der mit einer der Berstscheibe 2 zugewandten Seite an der rinnenartigen Einwölbung 81 des Niederhalters 8 anliegt. Dieser fasst einen Bereich 43 an, der nicht an dem Niederhalter 8, sondern an der Berstscheibe 2 anliegt. In diesen an der Berstscheibe 2 anliegenden Bereich 43 des Stützelementes 4 werden Kräfte, die auf der Hochdruckseite der Berstscheibe 2 in die Berstscheibe 2 eingeleitet werden, in das Stützelement 4 eingeleitet. Diese Kräfte werden dann innerhalb des Stützelementes 4 über den Stützbereich 42 in den Befestigungsbereich 41 geleitet. Von dort aus gelangen die Kräfte über die Schrauben 7, mit denen u.a. das Stützelement 4 an dem Bauteil 1, das den Fluiddurchgang bildet, befestigt ist, den Niederhalter 8 und die Berstscheibe 2, in das Bauteil 1.

In dem Stützbereich 42 sind zwei lange Sollbruchlinien 44, 45 vorgesehen, die sich nahezu parallel zu einer Kante des Niederhalters 8 erstrecken und durch eine Nut in dem Stützelement 4 gebildet sind. Die langen Sollbruchlinien 44, 45 erstrecken sich über einen Winkel von ca. 25° bis 35°. An diesen Sollbruchlinien endet das Durchgangsloch des Niederhalters 8, in das der Aktuator 3 hineinragt. Durch eine Betätigung des Aktuators 3 kann dieser auf die langen Sollbruchlinien 44, 45 Einwirken, so dass sie brechen.

Etwa an den Enden der langen Sollbruchlinien 44, 45 beginnen Schlitze 46, die einen gezackten Verlauf haben und die sich mit Abstand zu der bereits genannten Kante des Niederhalters 8 entlang dieser Kante über Winkelbereiche von ca. je 85° bis 115° erstrecken. Es könnte je ein gezackter Schlitz 46 an den Enden der Sollbruchlinien 44, 45 beginnen. Beim dargestellten Beispiel sind es mehrere aufeinander folgende gezackte Schlitze 46, die von Abschnitten unterbrochen werden, die Stege zwischen den Schlitzen 46 bilden. Diese Stege können kurze Sollbruchlinien 47 aufweisen. Ein der langen Sollbruchlinie 44, 45 gegenüberliegender Abschnitt 421 des Stützbereichs 42 ist frei von Schlitzen und Sollbruchlinien. Dieser Abschnitt 421 bildet ein Scharnier, was später noch erläutert wird.

Auf den Befestigungsbereich des Stützelementes 4 ist ein Konterring 9 aufgelegt. Dieser hat ebenfalls Durchgangslöcher für die Schrauben 7, die in die Schraublöcher 14 in dem Absatz 13 des Bauteils 1 eingeschraubt sind, das den Fluiddurchgang bildet. Die Durchgangslöcher haben zwei Stufen. Eine erste, der Berstscheibe 2 abgewandte Stufe, die einen ersten Durchmesser hat, und eine zweite, der Berstscheibe 2 zugewandte Stufe, die einen zweiten Durchmesser hat, der kleiner ist als der erste Durchmesser. Die Schrauben 7 sind durch diese Durchgangslöcher eingesetzt. Die Köpfe 71 der Schrauben 7 haben einen Durchmesser, der kleiner ist als der erste Durchmesser und größer ist als der zweite Durchmesser, liegen an einem Absatz zwischen den beiden Stufen an. Durch Anziehen der Schrauben 7 werden dann der Konterring 9, das Stützelement 4, der Niederhalter 8 und die Berstscheibe 2 gegen den Absatz 13 des Bauteils 1 gezogen, dass den Fluiddurchgang bildet.

Der Aktuator 3, der in das Bauteil eingesetzt und dort befestigt ist und den Befestigungsbereich 21 der Berstscheibe 2 durchragt und in den Niederhalter 8 hineinragt, hat ein Gehäuse in dem eine Treibladung und ein Stößel 31 angeordnet sind. Wird die Treibladung elektrisch gezündet, schnellt der Stößel 31 vor und schlägt gegen die langen Sollbruchlinien 44, 45 im Stützbereich 41 des Stützelementes 4. Aufgrund dieses Schlags brechen die langen Sollbruchlinien 44, 45. Was nun folgt ist eine Kettenreaktion: Der Druck, der auf der Hochdruckseite der Berstscheibe 2 lastet, kann von dem Stützelement 4 aufgrund der gebrochenen langen Sollbruchlinien 44, 45 nicht mehr wie bisher abgeleitet werden. Die Berstscheibe 2 drückt dadurch auf die noch verbliebenen kurzen Sollbruchlinien 46, die aufgrund dieses Drucks ebenfalls brechen. Der auf der Berstscheibe 2 lastende Druck kann dann noch weniger von dem Stützelement 4 abgeleitet werden. Es ist nur noch das Scharnier 421, das den an der Berstscheibe 2 anliegenden Bereich 43 des Stützelementes 4 und den Befestigungsbereich 41 des Stützelementes 4, über den die von der Berstscheibe 2 kommende Kraft in das Bauteil 1 abgeleitet werden kann, miteinander verbindet und die Kraft in das Bauteil 1 ableiten kann. Die Berstscheibe drückt sich dadurch in die gezackten Ränder 461 der Schlitze 46 des Stützelementes 4, zugleich beginnt die Berstscheibe 2 umzuschlagen. Beim Umschlagen reißen die gezackten Ränder 461 die Berstscheibe 2 auf. Das Scharnier 421 und das Aufreißen der Berstscheibe 2 entlang der gezackten Ränder 461 der Schlitze 46 in dem Stützelement 4 bewirken ein kontrolliertes Öffnen der Bestscheibe 2, möglichst ohne dass Teile der Berstscheibe 2 abreißen und mit dem aus der Flasche B ausströmenden Fluid mitgerissen werden.

In dem Bauteil 1, welches den Fluiddurchgang bildet, ist in einem an die Flasche B angrenzenden Teil ein Durchgangsloch vorgesehen, über die die Flasche B einerseits befüllt werden kann und andererseits ein Manometer 10 angeschlossen ist, mit dem der Druck des Fluids in der Flasche B überwacht werden kann. Zusätzlich kann ein Drucksenor vorhanden sein, mit dem Druck auf der Hochdruckseite der Berstscheibe gemessen werden kann.

## Patentansprüche

1. Anordnung (A) zum Absperren oder Freigeben eines Durchflusses von Fluiden durch ein das Fluid von einer Hochdruckseite zu einer Niederdruckseite leitendes Bauteil (1), das einen Fluiddurchgang begrenzt, wobei die Anordnung,
- das Bauteil (1), das das Fluid leitet,
- eine Berstscheibe (2) als Mittel zum Verschließen des Fluiddurchgangs durch das Bauteil (1), welche die Hochdruckseite und die Niederdruckseite trennt, wobei die Berstscheibe (2) zumindest mittelbar an dem Bauteil (1) befestigt ist, und
- einen steuerbaren Aktuator (3), der zum Freigeben des Fluiddurchgangs ansteuerbar ist,
aufweist,
wobei die Anordnung (A) ein Stützelement (4) zum Stützen der Berstscheibe (2) aufweist, welches auf der Niederdruckseite der Berstscheibe (2) angeordnet ist,
wobei das Stützelement (4) einen Befestigungsbereich (41) hat, mit dem das Stützelement (4) zumindest mittelbar an dem das Fluid leitenden Bauteil befestigt ist,
wobei zum Stützen der Berstscheibe (2)
- das Stützelement (4) zumindest mittelbar Kontakt zu der Niederdruckseite der Berstscheibe (2) hat und eine dort auf der Bertscheibe (2) lastende Kraft aufnimmt,
- das Stützelement (4) zumindest mittelbar Kontakt zu dem Bauteil (1) mit dem Fluiddurchgang hat und die von der Berstscheibe (2) aufgenommene Kraft in das Bauteil (1) ableitet und,
- zwischen diesen beiden Kontaktstellen die aufgenommene Kraft durch das Stützelement (4) geleitet ist,
und das Stützelement (4) die Berstscheibe (2) stützt, so dass die Berstscheibe (2) einem Druck des Fluids auf der Hochdruckseite größer als ein Nennberstdruck der Berstscheibe (2) aber kleiner als ein Maximaldruck standhält,
**dadurch gekennzeichnet,**
**dass** der Aktuator (3) und das Stützelement (4) so zueinander angeordnet sind, dass der Aktuator (3) zum Freigeben des Fluiddurchgangs das Stützelement (4) zerstören oder beschädigen kann und ein auf der Hochdruckseite der Berstscheibe anstehender Druck des Fluides die Berstscheibe (2) zum Bersten bringt, wenn der Druck auf der Hochdruckseite der Berstscheibe (2) höher ist als der Nennberstdruck der Berstscheibe (2),
wobei das Stützelement (4) zwischen seinem Befestigungsbereich (41) und dem an der Berstscheibe (2) anliegenden Bereich (43) einen Stützbereich (42) hat, durch den die Kräfte von dem an der Berstscheibe (2) anliegenden Bereich (43) des Stützelements (4) zum Befestigungsbereich (41) des Stützelementes (4) geleitet werden,
wobei mit dem Aktuator (3) zum Freigeben des Fluiddurchgangs an einer Stelle zwischen den beiden Kontaktstellen oder auch den Kontaktstellen selbst die Zerstörung oder Beschädigung des Stützelementes (4) herbeiführbar ist, um das Stützelement (4) so zu zerstören oder zu beschädigen, dass es seine Funktion als Stütze für die Berstscheibe (2) nicht mehr erfüllt.

2. Anordnung nach Anspruch 1, **dadurch gekennzeichnet, dass** die Berstscheibe (2) eine gewölbte Berstscheibe oder eine flache Berstscheibe ist.

3. Anordnung nach Anspruch 1 oder 2, **dadurch gekennzeichnet, dass** das Stützelement (4) eine Scheibe ist, das zumindest bereichsweise an der Berstscheibe (2) anliegt, vorteilhaft in einem Bereich (43), in dem die Berstscheibe (2) dem auf der Hochdruckseite herrschendem Druck ausgesetzt ist.

4. Anordnung nach Anspruch 2 und 3, **dadurch gekennzeichnet, dass** die das Stützelement (4) bildende Scheibe zumindest bereichsweise so gewölbt ist wie die Berstscheibe (2).

5. Anordnung nach einem der Ansprüche 1 bis 4, **dadurch gekennzeichnet, dass** das Stützelement (4) einen Befestigungsbereich (41) hat, mit dem das Stützelement (4) zumindest mittelbar an dem das Fluid leitenden Bauteil (1) befestigt ist.

6. Anordnung nach Anspruch 3 und 5, **dadurch gekennzeichnet, dass** das Stützelement (4) zwischen dem Befestigungsbereich (41) und dem an der Berstscheibe anliegenden Bereich (43) einen Stützbereich (42) hat, mit dem der Aktuator (3) zum Freigeben des Fluiddurchgangs zusammenwirkt.

7. Anordnung nach Anspruch 6, **dadurch gekennzeichnet, dass** der Aktuator (3) einen Stößel (31) und einen Antrieb zum Antreiben des Stößels (31) aufweist und dass der Antrieb des Aktuators (3) zum Freigeben des Fluiddurchgangs den Stößel (31) gegen den Stützbereich schlägt.

8. Anordnung nach einem der Ansprüche 1 bis 7, **dadurch gekennzeichnet, dass** das Stützelement (4) wenigstens eine Sollbruchstelle, Sollbruchlinie (44, 45) oder dergleichen aufweist.

9. Anordnung nach Anspruch 6 und Anspruch 8, **dadurch gekennzeichnet, dass** der Stützbereich (42) die Sollbruchstelle, Sollbruchlinie (44, 45, 47) oder dergleichen oder eine oder mehrere der Sollbruchstellen, Sollbruchlinien oder dergleichen aufweist.

10. Anordnung nach Anspruch 3, **dadurch gekennzeichnet, dass** das Stützelement (4), insbesondere im Stützbereich (42) Schlitze (46) aufweist.

## Claims

1. Arrangement (A) for blocking or releasing a flow of fluids through a component (1) which conducts the fluid from a high-pressure side to a low-pressure side and which delimits a fluid passage, wherein the arrangement comprises
- the component (1) which conducts the fluid,
- a bursting disc (2) as means for closing the fluid passage through the component (1), which bursting disc separates the high-pressure side and the low-pressure side, wherein the bursting disc (2) is fastened at least indirectly to the component (1), and
- a controllable actuator (3) which can be actuated to release the fluid passage,
wherein
the arrangement (A) comprises a supporting element (4) for supporting the bursting disc (2), which supporting element is arranged on the low-pressure side of the bursting disc (2),
wherein the supporting element (4) has a fastening region (41) with which the supporting element (4) is fastened at least indirectly to the component which conducts the fluid,
wherein, in order to support the bursting disc (2),
- the supporting element (4) has at least indirect contact with the low-pressure side of the bursting disc (2) and absorbs a force which loads there on the bursting disc (2),
- the supporting element (4) has at least indirect contact with the component (1) with the fluid passage and directs the force absorbed by the bursting disc (2) into the component (1), and
- between these two contact points, the absorbed force is conducted through the supporting element (4),
and the supporting element (4) supports the bursting disc (2) such that the bursting disc (2) withstands a pressure of the fluid on the high-pressure side which is greater than a nominal bursting pressure of the bursting disc (2) but less than a maximum pressure,
**characterized in that**
the actuator (3) and the supporting element (4) are arranged with respect to one another such that the actuator (3) can destroy or damage the supporting element (4) in order to release the fluid passage and a pressure of the fluid which is present on the high-pressure side of the bursting disc causes the bursting disc (2) to burst when the pressure on the high-pressure side of the bursting disc (2) is higher than the nominal bursting pressure of the bursting disc (2),
wherein the supporting element (4) has, between its fastening region (41) and the region (43) which bears against the bursting disc (2), a supporting region (42) through which the forces are conducted from the region (43) of the supporting element (4) which bears against the bursting disc (2) to the fastening region (41) of the supporting element (4),
wherein, with the actuator (3), in order to release the fluid passage, the destruction or damage of the supporting element (4) can be brought about at a point between the two contact points or else the contact points themselves, in order to destroy or damage the supporting element (4) such that it no longer fulfils its function as a support for the bursting disc (2).

2. Arrangement according to Claim 1, **characterized in that** the bursting disc (2) is a curved bursting disc or a flat bursting disc.

3. Arrangement according to Claim 1 or 2, **characterized in that** the supporting element (4) is a disc which bears at least regionally against the bursting disc (2), advantageously in a region (43) in which the bursting disc (2) is exposed to the pressure which prevails on the high-pressure side.

4. Arrangement according to Claims 2 and 3, **characterized in that** the disc which forms the supporting element (4) is curved at least regionally in the same way as the bursting disc (2).

5. Arrangement according to one of Claims 1 to 4, **characterized in that** the supporting element (4) has a fastening region (41) with which the supporting element (4) is fastened at least indirectly to the component (1) which conducts the fluid.

6. Arrangement according to Claims 3 and 5, **characterized in that** the supporting element (4) has, between the fastening region (41) and the region (43) which bears against the bursting disc, a supporting region (42) with which the actuator (3) interacts in order to release the fluid passage.

7. Arrangement according to Claim 6, **characterized in that** the actuator (3) has a plunger (31) and a drive for driving the plunger (31), and **in that** the drive of the actuator (3) strikes the plunger (31) against the supporting region in order to release the fluid passage.

8. Arrangement according to one of Claims 1 to 7, **characterized in that** the supporting element (4) has at least one predetermined breaking point, predetermined breaking line (44, 45) or the like.

9. Arrangement according to Claim 6 and Claim 8, **characterized in that** the supporting region (42) has the predetermined breaking point, predetermined breaking line (44, 45, 47) or the like or one or more of the predetermined breaking points, predetermined breaking lines or the like.

10. Arrangement according to Claim 3, **characterized in that** the supporting element (4) has slots (46), in particular in the supporting region (42).

## Revendications

1. Agencement (A) pour bloquer ou libérer un écoulement de fluides à travers un composant (1) conduisant le fluide d'un côté haute pression à un côté basse pression, qui délimite un passage de fluide, l'agencement comprenant
- le composant (1) qui conduit le fluide,
- un disque de rupture (2) en tant que moyen pour fermer le passage de fluide à travers le composant (1), qui sépare le côté haute pression et le côté basse pression, le disque de rupture (2) étant fixé au moins indirectement au composant (1), et
- un actionneur commandable (3) qui peut être commandé pour libérer le passage de fluide,
dans lequel
l'agencement (A) comprend un élément de support (4) pour supporter le disque de rupture (2), qui est disposé sur le côté basse pression du disque de rupture (2),
dans lequel l'élément de support (4) a une région de fixation (41) avec laquelle l'élément de support (4) est fixé au moins indirectement au composant conduisant le fluide,
dans lequel, pour supporter le disque de rupture (2),
- l'élément de support (4) a au moins indirectement un contact avec le côté basse pression du disque de rupture (2) et y reçoit une force de charge sur le disque de rupture (2),
- l'élément de support (4) a au moins indirectement un contact avec le composant (1) avec le passage de fluide et dévie la force reçue par le disque de rupture (2) dans le composant (1), et
- entre ces deux points de contact, la force reçue est conduite à travers l'élément de support (4),
et l'élément de support (4) supporte le disque de rupture (2) de sorte que le disque de rupture (2) résiste à une pression du fluide sur le côté haute pression supérieure à une pression de rupture nominale du disque de rupture (2) mais inférieure à une pression maximale,
**caractérisé en ce que**
l'actionneur (3) et l'élément de support (4) sont disposés l'un par rapport à l'autre de sorte que l'actionneur (3) peut détruire ou endommager l'élément de support (4) pour libérer le passage de fluide et une pression du fluide présente sur le côté haute pression du disque de rupture amène le disque de rupture (2) à éclater lorsque la pression sur le côté haute pression du disque de rupture (2) est supérieure à la pression de rupture nominale du disque de rupture (2),
dans lequel l'élément de support (4) a entre sa région de fixation (41) et la région (43) adjacente au disque de rupture (2) une région de support (42) par laquelle les forces sont conduites de la région (43) de l'élément de support (4) adjacente au disque de rupture (2) à la région de fixation (41) de l'élément de support (4),
dans lequel la destruction ou l'endommagement de l'élément de support (4) peut être provoqué avec l'actionneur (3) pour libérer le passage de fluide à un emplacement entre les deux points de contact ou également les points de contact eux-mêmes, afin de détruire ou d'endommager l'élément de support (4) de sorte qu'il ne remplit plus sa fonction de support pour le disque de rupture (2).

2. Agencement selon la revendication 1, **caractérisé en ce que** le disque de rupture (2) est un disque de rupture bombé ou un disque de rupture plat.

3. Agencement selon la revendication 1 ou 2, **caractérisé en ce que** l'élément de support (4) est un disque qui est adjacent au moins en partie au disque de rupture (2), avantageusement dans une région (43) dans laquelle le disque de rupture (2) est exposé à la pression régnant sur le côté haute pression.

4. Agencement selon les revendications 2 et 3, **caractérisé en ce que** le disque formant l'élément de support (4) est au moins en partie aussi bombé que le disque de rupture (2).

5. Agencement selon l'une quelconque des revendications 1 à 4, **caractérisé en ce que** l'élément de support (4) a une région de fixation (41) avec laquelle l'élément de support (4) est fixé au moins indirectement au composant conduisant le fluide (1).

6. Agencement selon les revendications 3 et 5, **caractérisé en ce que** l'élément de support (4) a entre la région de fixation (41) et la région (43) adjacente au disque de rupture une région de support (42) avec laquelle l'actionneur (3) coopère pour libérer le passage de fluide.

7. Agencement selon la revendication 6, **caractérisé en ce que** l'actionneur (3) comprend un poussoir (31) et un entraînement pour entraîner le poussoir (31) et **en ce que** l'entraînement de l'actionneur (3) pour libérer le passage de fluide frappe le poussoir (31) contre la région de support.

8. Agencement selon l'une quelconque des revendications 1 à 7, **caractérisé en ce que** l'élément de support (4) comprend au moins un point destiné à la rupture, une ligne destinée à la rupture (44, 45) ou similaire.

9. Agencement selon la revendication 6 et la revendication 8, **caractérisé en ce que** la région de support (42) comprend le point destiné à la rupture, la ligne destinée à la rupture (44, 45, 47) ou similaire ou un ou plusieurs des points destinés à la rupture, lignes destinées à la rupture ou similaire.

10. Agencement selon la revendication 3, **caractérisé en ce que** l'élément de support (4) comprend des fentes (46), en particulier dans la région de support (42).
